# EUROPÄISCHE PATENTSCHRIFT

(11) **EP 2 142 939 B1**
(45) Veröffentlichungstag und Bekanntmachung des Hinweises auf die Patenterteilung: **12.01.2011**
(21) Anmeldenummer: 08749319.3
(22) Anmeldetag: 05.05.2008
(51) Int. Cl.: G01S 3/784

(54) **LAGEBESTIMMUNGSVERFAHREN, LASERSTRAHLDETEKTOR UND DETEKTOR-REFLEKTOR-VORRICHTUNG FÜR EIN LAGEBESTIMMUNGSSYSTEM**
METHOD FOR DETERMINING POSITION, LASER BEAM DETECTOR AND DETECTOR-REFLECTOR DEVICE FOR A SYSTEM FOR DETERMINING POSITION
PROCÉDÉ DE DÉTERMINATION DE POSITION, DÉTECTEUR DE RAYON LASER ET DISPOSITIF DÉTECTEUR-RÉFLECTEUR POUR SYSTÈME DE DÉTERMINATION DE POSITION

(30) Priorität: 10.05.2007 EP 07107971
(43) Veröffentlichungstag der Anmeldung: 13.01.2010
(73) Patentinhaber: Leica Geosystems AG, 9435 Heerbrugg (CH)
(72) Erfinder: PETSCHKO, Hansjörg, CH-8001 Zürich (CH); SCHNEIDER, Klaus, A-6850 Dornbirn (AT)
(74) Vertreter: Kaminski Harmann
(86) Internationale Anmeldenummer: PCT/EP2008/003590
(87) Internationale Veröffentlichungsnummer: WO 2008/138507

(56) Entgegenhaltungen:
- EP-A- 1 710 602
- GB-A- 1 482 753
- US-A- 4 897 538
- US-A- 4 912 643
- US-A- 5 057 833
- US-A- 5 100 229
- US-A- 5 579 102

## Beschreibung

Die Erfindung betrifft ein Lagebestimmungsverfahren gemäss dem Anspruch 1, eine Verwendung des Lagebestimmungsverfahrens, einen Laserstrahldetektor nach dem Anspruch 7 und eine Detektor-Reflektor-Vorrichtung.

Die Lagebestimmung, d.h. der Positions- und/oder Orientierungsbestimmung, eines Objektes, beispielsweise einer mobilen Maschine, mittels einer Totalstation ist seit langem bekannt. Dabei wird beispielsweise ein reflektierendes Prisma in relativ zum Objekt bekannter Position an demselben angebracht und mittels einer Totalstation mit einem Laserstrahl angemessen. Der reflektierte Strahl wird von der Totalstation empfangen. Mittels einer Phasen- oder Zeitdifferenz des emittierten und des empfangenen Strahls wird die Distanz des Reflektors zur Totalstation abgeleitet und anhand der Emissionsrichtung des Strahls der Raumwinkel des Objekts relativ zur Totalstation erfasst, so dass die Position des Objektes bestimmt werden kann.

Von einer mit einem solchen System bestimmten Position aus werden dann meist weitere Messungen durchgeführt, die mit der Position verknüpft sind und zumeist auch die Kenntnis der Orientierung des Objektes im Raum benötigen. Grundsätzlich kann dabei auch aus der Positionsbestimmung von zwei oder mehr Punkten auf die Orientierung geschlossen werden. Für messtechnische Anwendungen sind zur eindeutigen Festlegung der absoluten Lage im Raum die 6 Freiheitsgrade des Objektes, zumindest aber die Position und damit 3 Freiheitsgrade, zu bestimmen. Die Problemstellung beinhaltet somit die Bestimmung von Position und Orientierung als zwei grundsätzlich getrennt lösbare Aufgaben, die aber für viele Anwendungen verknüpft durchgeführt werden müssen. Im Regelfall werden somit sowohl Position als auch Orientierung bzw. Ausrichtung eines Objektes benötigt.

Zur zusätzlichen Bestimmung der Ausrichtung des Objektes verwenden Systeme des Standes der Technik z.B. mehrere reflektierende Elemente, die mit bekannter Position relativ zueinander und zur Maschine angebracht sind. Durch das Anmessen der mehreren Reflektoren und durch die bekannte Relativposition der Reflektoren zueinander wird die Ausrichtung der Maschine ermittelt. Ein Nachteil solcher Systeme ist das aufwändige Anmessen der mehreren reflektierenden Elemente bzw. das Aufstellen und Bedienen mehrerer Totalstationen.

Eine weitere bekannte Möglichkeit zur Bestimmung der Ausrichtung eines Objektes in einer horizontalen Ebene ist die Verwendung eins Kompasses.

Ebenso ist aus dem Stand der Technik die Bestimmung der Position einer mobilen Maschine mittels eines GPS-Empfängers bekannt, der zum Beispiel an der Maschine angebracht oder in der Maschine integriert ist. Zur zusätzlichen Bestimmung der Ausrichtung der Maschine sind allerdings mindestens zwei horizontal beabstandet an der Maschine angebrachte GPS-Empfänger notwendig. Dabei wird anhand bekannter GPS-Positionsbestimmung die Position jedes einzelnen Empfängers ermittelt und mittels der bekannten relativen Lage der Empfänger zueinender die Ausrichtung der Maschine bestimmt. Allerdings muss zur Positionsbestimmung via GPS stets Sichtkontakt zu mindestens drei, vorzugsweise mindestens vier Satelliten bestehen, was jedoch vor allem bei Arbeiten unter Bücken, in engen Häuserfluchten oder aufgrund anderer Abschattungen nicht der Fall ist. Des Weiteren ist die Messgenauigkeit der Position, insbesondere der vertikalen Position, einer Maschine bei Satellitenpositionsbestimmungen im Vergleich zur Genauigkeit bei geodätischen Vermessungen geringer.

Infolgedessen bietet bei entsprechenden Anforderungen der Einsatz von hochpräzisen optischen Messverfahren, wie sie aus der Geodäsie bekannt sind, weiterhin Vorteile.

Bei einer weiteren bekannten Möglichkeit, Informationen über die Orientierung einer Maschine bereitzustellen, wird die Position der Maschine verfolgt und aus den Positionsänderungen eine Fahrtrichtung bestimmt. Mit der Annahme, dass die Fahrtrichtung einer bestimmten Orientierung der Maschine entspreche, kann daraus Information über die Orientierung der Maschine abgeleitet werden. Eine Drift bei der Bewegung der Maschine bleibt bei dieser Methode unbeachtet. Die EP 1 710 602 offenbart ein Verfahren Zur Lagebestimmung gemäß dem Oberbegriff des Anspruchs 1.

Die WO 2006/070009 zeigt eine Methode zur Bestimmung der Position und der Ausrichtung eines Objekts mit einem Rotationslaser und zwei Detektoren. Der Rotationslaser sendet einen mit winkelabhängiger Information behafteten horizontalen Laserstrahl aus, welcher jeweils von den beiden in bekannter Position an der Maschine angebrachten Detektoren empfangen wird. Aus den jeweils empfangenen Winkelinformationen und der bekannten Relativposition der Detektoren zueinander werden die Position und die Ausrichtung der Maschine relativ zum Rotationslaser abgeleitet.

Die meisten bekannten Methoden und Systeme des Standes der Technik zur Bestimmung der Position und der Ausrichtung eines Objekts fordern stets getrennte Messvorgänge zu mindestens zwei horizontal beabstandeten Messpunkten. Dies ist häufig sehr aufwändig und kann für bestimmte Anforderungen, wie unter anderem zur Vermessung eines horizontal sehr gering ausgedehnten Objekts ungenau und ungeeignet sein. Wie schon erwähnt ist ebenso die Begrenztheit der Einsatzmöglichkeiten von GPS-Systemen von Nachteil.

Die WO 2006/097408 beschreibt ein Lagebestimmungsverfahren zur Bestimmung von Position und Orientierung einer Einheit. Dabei basiert der Ansatz auf der Positionsbestimmung der Einheit durch ein abtastendes System, z.B. einen Laserscanner. Die Orientierungsbestimmung der Einheit erfolgt durch eine Messung der Lage eines auf der Einheit angeordneten Empfängers relativ zur Strahlachse der von der Abtasteinheit emittierten Strahlung. Aus der Kenntnis der Lage des Empfängers zur Strahlachse und der Kenntnis der Lage des Empfängers relativ zu einer Trägerkomponente der Einheit kann die Orientierung der Einheit abgeleitet werden. Aus der Positions- und der Orientierungsinformation folgt damit die Kenntnis der Lage im Raum.

Da die Orientierung anhand eines Versatzes des Empfängers zur Strahlachse bestimmt wird und die Optik des Empfängers lediglich einen begrenzten Öffnungswinkel aufweist, muss die Ausrichtung des Empfängers stets ungefähr der Strahlachse entsprechen bzw. bei Bewegung der Einheit der Strahlachse ständig nachgeführt werden. Zu einem festen Zeitpunkt besteht somit eine Bereitschaft des Empfängers, lediglich in einem bestimmt begrenzten Winkelbereich empfangen zu können.

Der Erfindung liegt die Aufgabe zugrunde, ein vereinfachtes optisches Verfahren zur Bestimmung der Ausrichtung und der Position eines Objekts bereitzustellen, insbesondere im Rahmen eines einzigen Anmessvorgangs durch eine Totalstation. Dabei soll die Bereitschaft gegeben sein, die Orientierung und die Position des Objekts in seiner beliebigen momentanen Orientierung und von beliebigen Raumpositionen aus ohne Nachführung einer Empfängeroptik zu bestimmen.

Eine weitere Aufgabe der Erfindung ist das Bereitstellen eines verbesserten Laserstrahldetektors zur Bestimmung einer Einfallsrichtung eines Laserstrahls und einer Detektor-Reflektor-Vorrichtung für ein Lagebestimmungssystem.

Diese Aufgaben werden erfindungsgemäss durch die Merkmale der Ansprüche 1 oder 7 oder durch Merkmale der abhängigen Ansprüche gelöst bzw. diese Lösungen weitergebildet.

Das erfindungsgemässe Lagebestimmungsverfahren zur Bestimmung der Ausrichtung eines einen Laserstrahlauftreffpunkt erfassenden Detektors verwendet eine Laserquelle zum Emittieren eines ersten Laserstrahls und gegebenenfalls ein reflektierendes Element, wobei dessen Position relativ zum Detektor bekannt ist.

Im Folgenden werden drei Richtungen verwendet. Unter dem Begriff "Reflektorrichtung" ist die Richtung des reflektierenden Elements - gemessen von der Laserquelle aus - zu verstehen. Als "Aussendrichtung" wird die Richtung des Detektors von der Laserquelle aus, in die der erste Laserstrahl emittiert wird, festgelegt. Eine "Einfallsrichtung" gibt die Richtung des ersten Laserstrahls relativ zum Detektor, d.h. die Richtung, aus der der erste Laserstrahl auf dem Detektor auftrifft, insbesondere projiziert in eine horizontale Ebene, an.

Erfindungsgemäss weist das Verfahren ein Emittieren des ersten Laserstrahls in Richtung des Detektors auf, wobei die Aussendrichtung definiert wird. Gegebenenfalls kann die Aussendrichtung aus der Reflektorrichtung abgeleitet werden. Es folgt ein Bestimmen eines Auftreffpunktes des ersten Laserstrahls auf dem Detektor. Aus diesem Auftreffpunkt wird die Einfallsrichtung abgeleitet. Anhand eines Verknüpfens der Einfallsrichtung mit der Aussendrichtung ist nun das Bestimmen der Ausrichtung des Detektors relativ zur Laserquelle möglich.

Das Erfassen der Reflektorrichtung erfolgt vorzugsweise anhand einer Totalstation, in die unter anderem die Laserquelle integriert sein kann. Das Erfassen kann dabei anhand eines Empfangens eines reflektierten Teils des ersten Laserstrahls oder mittels Aussenden und Empfangen eines zweiten Laserstrahls, wie aus dem Stand der Technik bekannt, erfolgen. Zusätzlich kann hierbei eine Entfernung des reflektierenden Elements ermittelt werden. Ebenso denkbar ist allerdings ein Erfassen der Reflektorrichtung mittels Kameraaufnahmen von der Laserquelle aus, die mit einer Bildverarbeitung ausgewertet werden.

Der erfindungsgemässe Laserstrahldetektor für ein Lagebestimmungssystem weist einen Erfassungsbereich auf, der insbesondere um eine vertikale Achse gebogen angeordnet ist und einen ebenen Winkelbereich von mindestens 180°, insbesondere mindestens 270°, vorzugsweise im Wesentlichen 360° abdeckt. Der detektierende Bereich des Detektors ist zur Detektion eines Laserstrahls ausgebildet und besteht aus mehreren Detektionszonen, wodurch der Erfassungsbereich in mehrere Teilerfassungsbereiche segmentiert wird. Anhand eines Empfangens des Strahls innerhalb einer Detektionszone ist ein Auftreffpunkt des Laserstrahls auf dem Detektor bestimmbar. Jede Detektionszone ist direkt mit einem ebenen Winkel, insbesondere um die vertikale Achse, verknüpft, der einer Teilerfassungsrichtung entspricht. Hieraus können die Einfallsrichtung des Laserstrahls und somit auch die Ausrichtung des Detektors relativ zur Einfallsrichtung bestimmt werden. Durch eine Abdeckung eines ebenen Empfangsbereichs von im Wesentlichen 360° besteht seitens des Laserstrahldetektors die Bereitschaft, Laserstrahlen aus beliebigen Richtungen zu empfangen, ohne dass eine grobe Vororientierung des Detektors notwendig ist.

Jede Detektionszone deckt dabei durch den jeweils zugeordneten Teilerfassungsbereich einen definierten azimutalen Winkelbereich ab, sodass - abhängig vom Auftreffpunkt des Laserstrahls auf dem Detektor - die Einfallsrichtung abgeleitet werden kann. Dazu sind die Detektionszonen um eine - insbesondere vertikale - Achse mit radialer Orientierung beispielsweise nebeneinander und aneinander anschliessend rundum angeordnet.

Die erfindungsgemässe Detektor-Reflektor-Vorrichtung für ein Lagebestimmungssystem weist einen erfindungsgemässen Laserstrahldetektor zur Ermittlung eines Laserstrahlauftreffpunktes als Detektor und ein reflektierendes Element als Reflektor auf. Das reflektierende Element und der Laserstrahldetektor sind in bekannter Position relativ zueinander angeordnet.

Eine Detektionszone kann festgelegt sein als entweder genau ein Sensorelement oder als mehrere Sensorelemente aufweisend. Im zweiten Fall wird allerdings eine geringere Winkelauflösung erreicht, als durch die Anzahl der Sensorelemente an sich möglich wäre. Im ersten Fall könnte des Weiteren eine Detektionszone als genau die Detektionsfläche des einen Sensorelements, aber auch als eine Zone grösser der Detektionsfläche des einen Sensorelements definiert sein. Ist die Zone grösser festgelegt als das Sensorelement, könnte weniger aufwändig ein grosser Erfassungsbereich abgedeckt werden. Allerdings würde dann die Möglichkeit bestehen, dass ein in der Detektionszone auftreffender Strahl mit einem hinreichend kleinem Querschnitt eventuell gar nicht detektiert wird. Als Sensorelemente können dabei beispielsweise Photodioden, CCD-Sensoren, CMOS-Sensoren oder PSD-Sensoren verwendet werden. Weist der Laserstrahl einen so grossen Strahlquerschnitt auf, dass er von mehreren Zonen detektiert wird, kann der Flächenschwerpunkt oder der Intensitätsschwerpunkt der Auftrefffläche als Auftreffpunkt bestimmt werden. Besteht der Detektionsbereich beispielsweise aus 180 Detektionszonen, die nebeneinander um eine vertikale Achse gebogen angeordnet sind und jeweils einen radialen Winkelbereich von 2° abdecken, so ist ein ebener Winkel, der eine relative Einfallsrichtung des Laserstrahls widerspiegelt, auf ein Grad genau messbar.

Das reflektierende Element kann, wie aus dem Stand der Technik bekannt, als Rundumprisma, als Katzenauge oder als Reflexionsfolie ausgebildet sein, sodass ein einfallender Laserstrahl mindestens teilweise zurück in die Einfallsrichtung reflektiert wird. Durch ein Anmessen des reflektierenden Elements anhand einer Totalstation sind in bekannter Weise eine Distanzinformation sowie eine Raumrichtung des reflektierenden Elements relativ zur Totalstation ermittelbar, woraus eine relative 3-D-Position des Elements bestimmt werden kann.

Eine Ausführungsmöglichkeit der Detektor-Reflektor-Vorrichtung ist eine Anordnung des Detektors und des reflektierenden Elements auf einer gemeinsamen vertikalen Achse. Die horizontale Komponente der Reflektorrichtung entspricht dann der horizontalen Komponente der Aussendrichtung. Wird das Rundumprisma mittels der Totalstation angemessen und emittiert beispielsweise die Totalstation zusätzlich einen vertikal aufgefächerten Laserstrahl in gleicher horizontaler Richtung wie zum Anmessen des Rundumprismas, so ist im Rahmen eines einzigen Arbeitsschrittes sowohl erfindungsgemäss die Ausrichtung des Detektors, als auch die Position des Prismas bestimmbar.

Eine weitere Ausführungsmöglichkeit der Detektor-Reflektor-Vorrichtung stellt eine Integration des Detektors in das reflektierende Element dar. Beim Anmessen des reflektierenden Elements mit einem Laserstrahl kann dieser anhand der Detektorzonen gleichzeitig detektiert werden. Ein Auftreffpunkt des Laserstrahls auf der Vorrichtung wird bestimmt, um daraus die Einfallsrichtung zu ermitteln. Aus der Einfallsrichtung ist anschliessend die Ausrichtung der Vorrichtung ableitbar. Im Rahmen eines einzigen Anmessvorgangs ist somit sowohl die relative 3-D-Position als auch die relative Ausrichtung der Detektor-Reflektor-Vorrichtung ermittelbar.

Wird die erfindungsgemässe Detektor-Reflektor-Vorrichtung an einem Objekt wie zum Beispiel einer mobilen Maschine angebracht, wobei die Ausrichtung des Detektors relativ zur Ausrichtung des Objekts bekannt ist, so kann aus der erfindungsgemäss ermittelten Ausrichtung des Detektors zusätzlich die relative Ausrichtung des Objekts abgeleitet werden. Weist der Detektionsbereich einen ebenen Empfangsbereich von im Wesentlichen 360° auf, so ist die relative Orientierung dieses Objekts anhand einer Totalstation von beliebiger Raumposition aus bzw. in beliebiger momentaner Orientierung des Objekts bestimmbar.

Unter dem Ausdruck "Ausrichtung eines Objekts" ist stets die Ausrichtung oder Orientierung des Objekts projiziert in eine Referenzebene zu verstehen, die zumeist tangential zur Erdoberfläche verläuft.

Das erfindungsgemässe Ausrichtungsbestimmungsverfahren, sowie der Laserstrahldetektor und die Detektor-Reflektor-Vorrichtung werden nachfolgend anhand von in der Zeichnung schematisch dargestellten Ausführungsbeispielen rein beispielhaft näher beschrieben. Im Einzelnen zeigen
- Fig.1: einen erfindungsgemässen Laserstrahldetektor für ein erfindungsgemässes Lagebestimmungsverfahren;
- Fig.2: eine Ausführungsform einer erfindungsgemässen Detektor-Reflektor-Vorrichtung;
- Fig.3a: eine erste integrierte Ausführungsform einer Detektor-Reflektor-Vorrichtung;
- Fig.3b: eine zweite integrierte Ausführungsform einer Detektor-Reflektor-Vorrichtung;
- Fig.3c: eine dritte integrierte Ausführungsform einer Detektor-Reflektor-Vorrichtung;
- Fig.4: eine Totalstation mit einer Detektor- Reflektor- Vorrichtung als Ausrichtungsbestimmungssystem;
- Fig.5: eine Totalstation mit einer Detektor- Reflektor- Vorrichtung, die an einer mobilen Maschine angebracht ist;
- Fig.6: eine Totalstation mit der dritten integrierten Ausführungsform einer Detektor-Reflektor- Vorrichtung, die an einer mobilen Maschine angebracht ist; und
- Fig.7: Vermessungsarbeiten in einer Tunnelkurve mittels zwei Totalstationen, wobei an einer Totalstation eine Detektor-Reflektor-Vorrichtung angebracht ist.

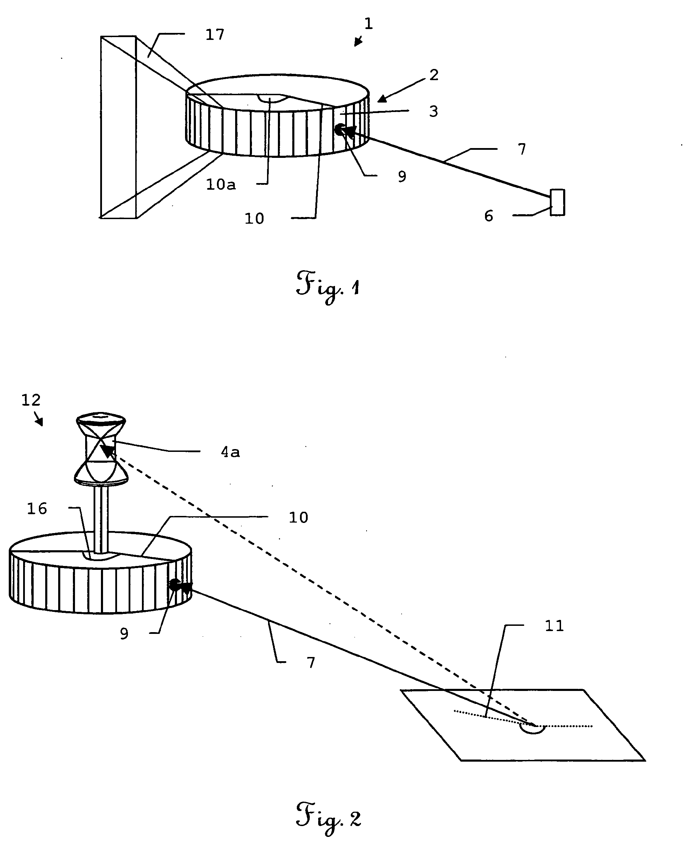

Figur 1 zeigt einen Laserstrahldetektor 1 zur Ermittlung eines Auftreffpunktes 9 für ein Lagebestimmungsverfahren. Bei diesem erfindungsgemässen Verfahren emittiert eine Laserquelle 6 einen ersten Laserstrahl 7 auf den Detektor 1, wobei eine Aussendrichtung definiert wird. Näherungsweise zeitgleich wird der erste Laserstrahl 7 vom Detektor 1 erfasst.

Der Detektor 1 weist eine Vielzahl von Detektionszonen, beispielsweise 72 Detektionszonen, auf, die aneinander angrenzend auf einer Zylindermantelfläche um eine vertikale Achse herum angeordnet sind. Ein Detektionsbereich 2 des Detektors 1 ergibt sich als Bereich aller Detektionszonen 3. Jede Zone 3 deckt zum Beispiel einen Winkelbereich von 5° ab, wodurch ein segmentierter Erfassungsbereich des Detektors 1 in einen ebenen Winkelbereich von 360° gegeben ist und der Erfassungsbereich eine entsprechende Zahl von diskreten Teilerfassungsbereichen 17 aufweist. Jedem Teilerfassungsbereich 17 ist eine definierte Teilerfassungsrichtung, beispielsweise als Richtung von der entsprechenden Detektionszone 3 zum Detektormittelpunkt, fest zugeordnet. Somit liegen die Teilerfassungsrichtungen der Detektionszonen 3 mit radialer Orientierung in einer Kreisscheibe und unterscheiden sich jeweils untereinander. Beim Erfassen des ersten Laserstrahls 7 innerhalb mindestens eines Teilerfassungsbereichs 17 bestimmt der Detektor 1 einen Auftreffpunkt 9 des ersten Laserstrahls 7 und leitet aus der entsprechenden mindestens einen Teilerfassungsrichtung eine Einfallsrichtung 10 ab.

Durch ein Verknüpfen der Aussendrichtung mit der Einfallsrichtung 10 wird nun die Lage des Detektors 1 relativ zur Laserquelle 6 bestimmt.

Die Detektionszonen 3 des Detektors 1 bestehen zum Beispiel aus CCD-Sensoren, Photodioden oder PSD-Sensoren. Wird ein Laserstrahl von mehreren Sensoren, denen unterschiedliche Teilerfassungsrichtungen zugeordnet sind, detektiert, kann ein punktförmiger Auftreffpunkt beispielsweise als der Flächenschwerpunkt der detektierten Auftrefffläche des Laserstrahls 7 festgelegt und daraus die Einfallsrichtung 10 bestimmt werden. Ebenso möglich ist ein Festlegen des Intensitätsschwerpunkts der detektierten Strahlung als Auftreffpunkt. Ein streifendes Auftreffen des Laserstrahls kann dann beispielsweise anhand einer asymmetrischen Intensitätsverteilung der detektierten Strahlung ermittelt werden und eine Fehlmessungsmeldung auslösen. Alternativ könnte jedoch auch direkt anhand einer solchen asymmetrischen Auftreffintensitätsverteilung die Einfallsrichtung des Laserstrahls abgeleitet werden. So können zum Beispiel ein linker Auftreffflächenrandpunkt, ein rechter Auftreffflächenrandpunkt und ein Intensitätsschwerpunkt bestimmt werden und anhand des Entfernungsverhältnisses von linkem und rechtem Randpunkt zum Intensitätsschwerpunkt die Einfallsrichtung abgeleitet werden.

Figur 2 zeigt eine erste Ausführungsform einer erfindungsgemässen Detektor-Reflektor-Vorrichtung für ein Lagebestimmungsverfahren. Die Detektor-Reflektor-Vorrichtung weist den in Figur 1 gezeigten Detektor 1 zur Detektion eines Laserstrahls und ein Rundumprisma 4a als reflektierendes Element auf. Der Detektor 1 ist mittels einer vertikalen Stange mit dem Rundumprisma 4a verbunden. Somit sind der Detektor 1 und das Rundumprisma 4a auf einer gemeinsamen vertikalen Achse, die der Hauptdrehachse des Detektors 1 entspricht, in bekannter Position relativ zueinander angeordnet.

Das Rundumprisma 4a ist ausgebildet, um beispielsweise mittels eines Laserstrahls von einem Raumpunkt aus angemessen zu werden. Die dabei erhaltene Reflektorrichtung dient der Ableitung der Aussendrichtung 11 des Laserstrahls, der in Richtung des Detektors emittiert wird.

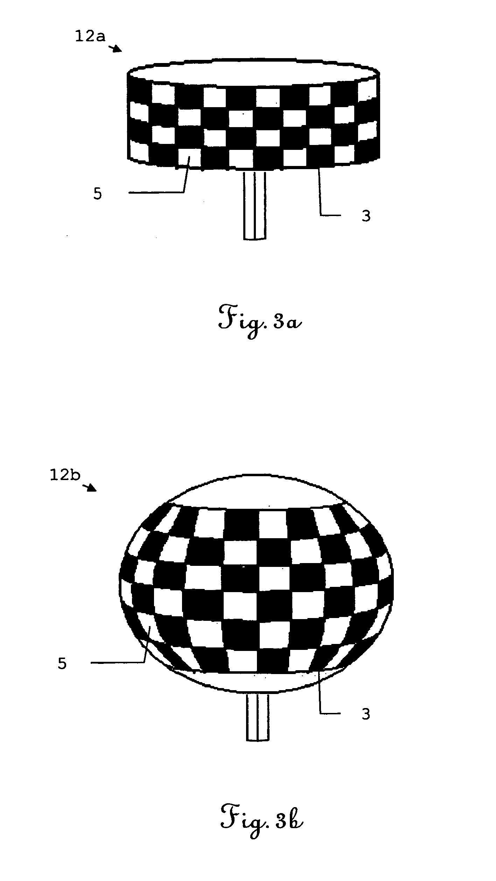

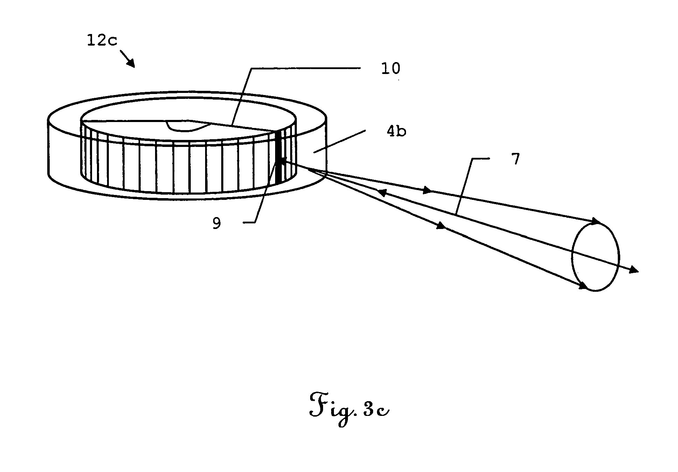

Figuren 3a, 3b und 3c zeigen drei integrierte Ausführungsformen einer erfindungsgemässen Detektor-Reflektor-Vorrichtung 12a, 12b und 12c.

In den Figuren 3a und 3b weist das reflektierende Element mehrere Reflexionszonen 5 und der Detektionsbereich mehrere Detektionszonen 3 auf. Die Reflexionszonen 5 sind beispielsweise katzenaugenähnlich oder als aufgeklebte Reflexionsfolien ausgebildet. Die Reflexions- und Detektionszonen sind schachbrettartig in Figur 3a auf einer Zylindermantelfläche und in Figur 3b auf einem Teil einer Kugeloberfläche und radial um eine vertikale Achse angebracht. Wird eine der gezeigten Detektor-Reflektor-Vorrichtungen beispielsweise mittels einer Totalstation angemessen, so ist der Anmesslaserstrahl gleichzeitig anhand der Detektionszonen 3 detektierbar. Jede Detektionszone 3 ist mit einer Winkelinformation verknüpft.

Wird der Anmesslaserstrahl innerhalb einer Detektionszone 3 empfangen, so ist daraus eine Einfallsrichtung des Strahls und somit die Orientierung der Vorrichtung relativ zum Anmessstrahl und auch relativ zur Totalstation ermittelbar.

In Figur 3c ist die Mantelfläche eines Zylinders als für einen Laserstrahl teildurchlässige Schicht 4b ausgebildet. Ein auftreffender Laserstrahl 7 wird von dieser Schicht grösstenteils reflektiert. Ein geringer Teil des Strahls wird dementsprechend transmittiert. Innerhalb des Zylinders, hinter der teildurchlässigen Schicht, ist der Detektionsbereich angeordnet. Der Detektionsbereich ist zur Detektion des transmittierten Teils des Laserstrahls und zur Ermittlung dessen Auftreffsegments 9 ausgebildet. Anhand des Auftreffsegments 9 ist eine relative ebene Laserstrahleinfallsrichtung 10 ableitbar. Wird die Vorrichtung 12c beispielsweise mit einer Totalstation anhand eines Laserstrahls 7 angemessen und die 3-D-Position ermittelt, so ist anhand der durch den integrierten Detektor abgeleiteten Laserstrahleinfallsrichtung 10 gleichzeitig die Ausrichtung der Vorrichtung 12c ermittelbar.

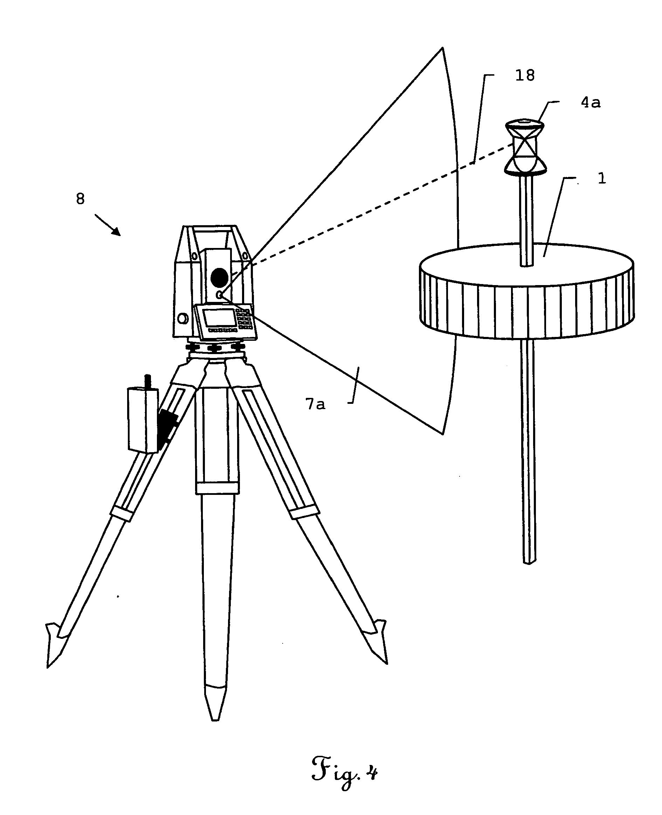

Figur 4 zeigt ein Lagebestimmungssystem aus einer Detektor-Reflektor-Vorrichtung und einer Totalstation 8. Ein Rundumprisma 4a als reflektierendes Element ist auf einer gemeinsamen vertikalen Achse über dem Detektor 1 angeordnet. Die Totalstation 8 misst mit einem Laserstrahl 18 das Rundumprisma 4a an und bestimmt anhand des reflektierten Strahls die Entfernung des Rundumprismas 4a und die Reflektorrichtung. Zusätzlich, insbesondere gleichzeitig oder anschliessend, emittiert die Totalstation 8 einen vertikal aufgefächerten Laserstrahl 7a in Richtung des Detektors 1, wobei die Aussendrichtung aus der Reflektorrichtung - in die der Laserstrahl 18 zum Anmessen des Rundumprismas 4a ausgesendet wird - abgeleitet bzw. durch diese Reflektorrichtung vorgegeben wird. Der Detektor 1 empfängt einen Teil des vertikal aufgefächerten Strahls 7a und bestimmt aus dem Auftreffpunkt auf dem Detektor die Einfallsrichtung des Laserfächers 7a. Anhand dieser Einfallsrichtung und der durch die Totalstation 8 bestimmten Reflektorrichtung ist die Ausrichtung des Detektors ableitbar. In einem einzigen Arbeitsschritt ist somit sowohl die dreidimensionale Position als auch die Ausrichtung des Detektors 1 bestimmbar.

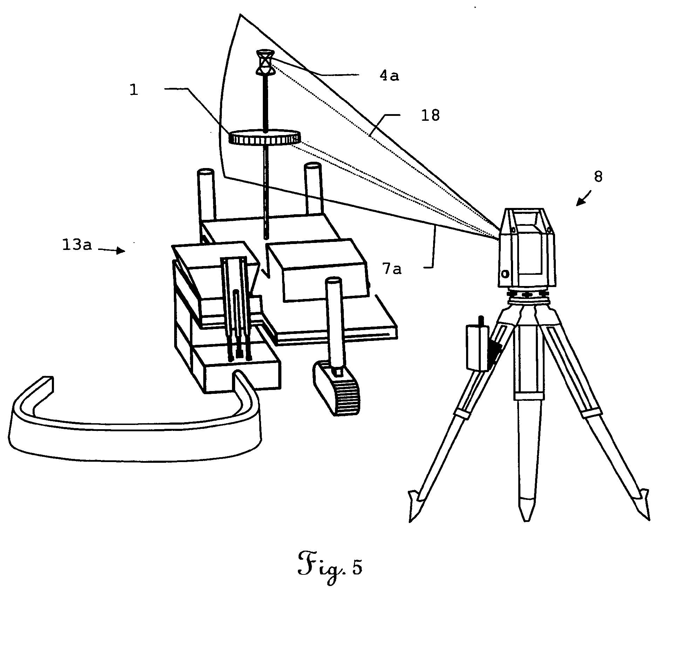

Figur 5 zeigt das in Figur 4 dargestellte Lagebestimmungssystem, wobei der Detektor 1 und das Rundumprisma 4a mit einer vertikalen Stange an einer mobilen Arbeitsmaschine 13a angebracht sind. Die Ausrichtung der Maschine 13a relativ zum Detektor 1 ist bekannt. Des Weiteren sind die relativen Positionen des Prismas 4a und des Detektors 1 zur Arbeitsmaschine 13a bekannt.

Erfindungsgemäss kann nun die Position und Orientierung der Arbeitsmaschine anhand einer Totalstation 8 wie folgt im Rahmen eines einzigen Arbeitsschrittes bestimmt werden: die Totalstation 8 misst das Prisma 4a in bekannter Weise mittels eines Laserstrahls 18 an, wobei Winkel und Entfernung zum Prisma 4a ermittelt werden, und emittiert dabei zusätzlich - beispielsweise zeitgleich oder direkt anschliessend - einen vertikal aufgefächerten Laserstrahl 7a in dieselbe azimutale Richtung wie den Anmess-Laserstrahl 18. Anhand der erfindungsgemäss durch den Detektor ermittelten azimutalen Einfallsrichtung des Laserfächers 7a kann nun als weitere Information bezüglich der Lage der Arbeitsmaschine im selben Arbeitsschritt ebenso die Ausrichtung bzw. Orientierung bestimmt und somit z.B. die 3-D-Position der mobilen Arbeitsmaschine 13a in einem Bezugssystem angegeben werden. Bewegt sich die mobile Maschine 13a relativ zur Totalstation 8 und wird das Rundumprisma 4a zusätzlich in bekannter Weise mittels der Totalstation 8 automatisch zielverfolgt, wobei die Totalstation 8 die Aussendrichtung des ersten, vertikal aufgefächerten Laserstrahls 7a fortlaufend der Reflektorrichtung angleicht, so ist die 3-D-Position und die Ausrichtung der Maschine 13a fortlaufend bestimmbar und daraus je nach Bedarf die Bewegungsrichtung, die Geschwindigkeit und die Seitwärtsdrift ableitbar.

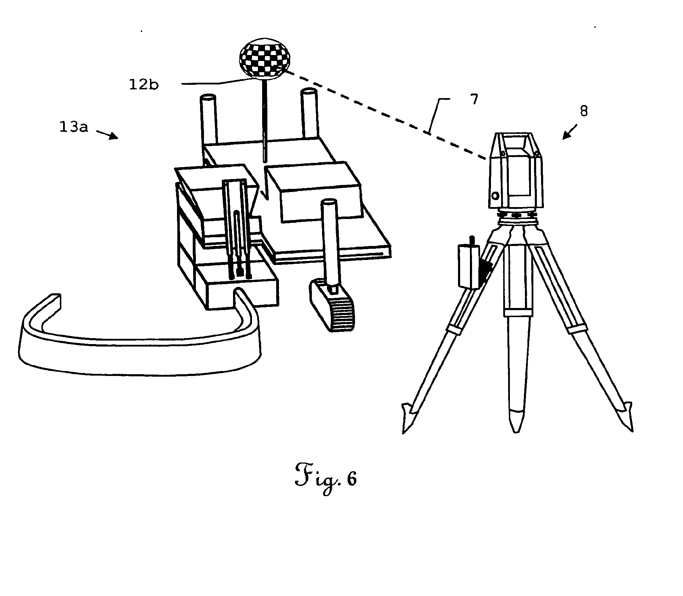

Figur 6 zeigt die integrierte Ausführungsform der Detektor-Reflektor-Vorrichtung 12b entsprechend Figur 3b, welche mit einer vertikalen Stange an einer mobilen Arbeitsmaschine 13a in bekannter Ausrichtung relativ zur Maschine 13a angebracht ist, und eine Totalstation 8, die die Vorrichtung 12b anhand eines Laserstrahls 7 anmisst. Mittels der Detektionszonen der Detektor-Reflektor-Vorrichtung 12b werden der Auftreffpunkt des Anmessstrahls auf der Vorrichtung 12b ermittelt und daraus die Einfallsrichtung des Strahls abgeleitet. Anhand der Einfallsrichtung des Strahls wird die Orientierung der Maschine 13a relativ zur Aussendrichtung des Anmessstrahls und somit relativ zur Totalstation 8 bestimmt.

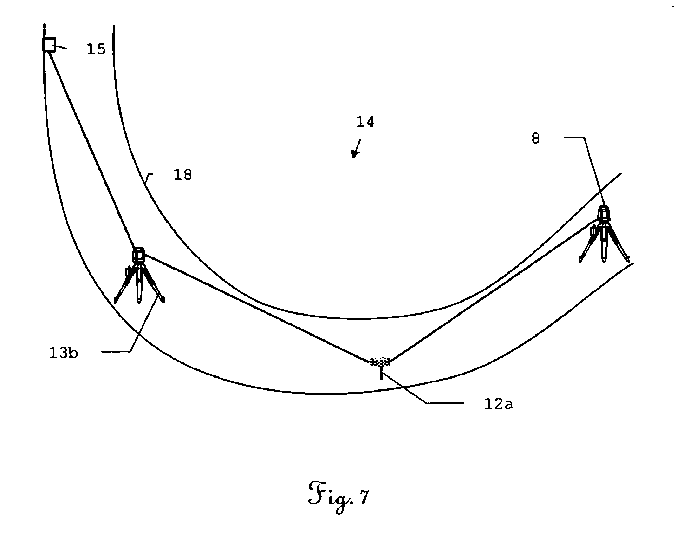

Figur 7 zeigt eine Vermessung eines Objekts, wie beispielsweise einer Überwachungskamera 15, in einem Tunnel mit der Tunnelwand 18, wobei kein Sichtkontakt vom definierten Messausgangspunkt, an dem die erste Totalstation 8 aufgestellt ist, zur Kamera 15 besteht. Hilfsweise werden eine zweite Totalstation 13b und die Detektor-Reflektor-Vorrichtung 12a aufgestellt, über die ein indirekter Sichtkontakt ermöglicht wird. Die erste Totalstation 8 und die zweite Totalstation 13b messen nun jeweils die relative Raumrichtung und die Distanz zur Detektor-Reflektor-Vorrichtung 12a. Erfindungsgemäss können dabei anhand der Detektor-Reflektor-Vorrichtung 12a nun die beiden Einfallsrichtungen gleichzeitig erfasst und in Bezug zueinander gestellt werden. Daraus werden die Position und die Ausrichtung der zweiten Totalstation 13b relativ zur Ersten 8 abgeleitet. Die zweite Totalstation 13b vermisst anschliessend in bekannter Weise die Überwachungskamera 15. Anhand der ermittelten Ausrichtung und der Position der zweiten Totalstation 13b relativ zur ersten Totalstation 8 und der Position der Überwachungskamera 15 von der zweiten Totalstation 13b aus ist mittels des Polygonzuges die Position der Kamera 15 von der ersten Totalstation 8 aus ableitbar.

Es versteht sich, dass diese dargestellten Figuren nur Beispiele möglicher Ausführungsformen darstellen.

## Patentansprüche

1. Lagebestimmungsverfahren mit einem
- Emittieren eines ersten Laserstrahls (7) durch eine in einem Bezugsystem positionierte Laserquelle (6) auf einen Detektor (1) und zeitgleiches Erfassen des ersten Laserstrahls (7) durch den Detektor (1), wodurch eine Aussendrichtung der Laserquelle (6) und eine Einfallsrichtung (10) auf den Detektor (1) definiert werden, und einem
- Bestimmen der Lage des Detektors (1) relativ zur Laserquelle (6) und dem Bezugsystem,
**dadurch gekennzeichnet, dass**
- der Detektor (1) einen segmentierten Erfassungsbereich aus einer Vielzahl von diskreten Teilerfassungsbereichen (17) aufweist, die jeweils eine definierte Teilerfassungsrichtung aufweisen und von denen sich wenigstens zwei Teilerfassungsrichtungen unterscheiden,
- beim Erfassen des ersten Laserstrahls (7) ein Auftreffpunkt (9) des ersten Laserstrahls (7) auf dem Detektor (1) mittels wenigstens einem Teilerfassungsbereich (17) erfasst wird und aus der zugeordneten wenigstens einen Teilerfassungsrichtung die Einfallsrichtung (10) des ersten Laserstrahls auf den Detektor (1) abgeleitet wird, und
- als die Lage des Detektors zumindest dessen azimutale Ausrichtung aus der Aussendrichtung und der Einfallsrichtung (10) bestimmt wird.

2. Lagebestimmungsverfahren nach Anspruch 1,
**dadurch gekennzeichnet, dass**
- dem Detektor (1) ein reflektierendes Element (4), insbesondere ein Rundumprisma (4a), räumlich so zugeordnet ist, dass die relative Position des reflektierenden Elements (4) zum Detektor (1) bekannt ist, und
- ein Bestimmen einer Relativposition des reflektierenden Elements (4) zur Laserquelle (6) erfolgt.

3. Lagebestimmungsverfahren nach Anspruch 2,
**dadurch gekennzeichnet, dass**
das reflektierende Element (4) und der Detektor (1) auf einer gemeinsamen Achse positioniert sind und der erste Laserstrahl (7) fächerförmig mit einer Öffnungsrichtung emittiert wird, wobei die Öffnungsrichtung im wesentlichen parallel zur gemeinsamen Achse orientiert ist.

4. Lagebestimmungsverfahren nach Anspruch 2 oder 3,
**dadurch gekennzeichnet, dass**
beim Bestimmen der Relativposition ein Anmessen des reflektierenden Elements (4) durch einen zweiten Laserstrahl (18) erfolgt, insbesondere gleichzeitig zum oder vor dem Emittieren des ersten Laserstrahls (7), wobei die Aussendrichtung des ersten Laserstrahls (7) durch die Richtung, in die der zweite Laserstrahl (18) zum Anmessen des reflektierenden Elements (4) ausgesendet wird, vorgegeben wird.

5. Lagebestimmungsverfahren nach einem der Ansprüche 2 bis 4,
**dadurch gekennzeichnet, dass**
der Detektor (1) in das reflektierende Element (4) integriert ist und beim Bestimmen der Relativposition die Aussendrichtung und eine Reflektorrichtung, als Richtung von der Laserquelle (6) zum reflektierenden Element (4), ermittelt werden.

6. Verwendung eines Lagebestimmungsverfahrens nach einem der Ansprüche 1 bis 5 zur Bestimmung einer Ausrichtung eines den Detektor (1) und das reflektierende Element (4) tragenden Objekts (13), insbesondere einer mobilen Fertigungsmaschine (13a).

7. Laserstrahldetektor für ein Lagebestimmungsverfahren nach Anspruch 1 bis 5, mit
einem Erfassungsbereich aus einer Vielzahl von diskreten Detektionszonen (3) denen jeweils eine definierte Teilerfassungsrichtung zugeordnet ist, insbesondere mindestens 36, vorzugsweise mindestens 72 Detektionszonen (3),
wobei ein Auftreffpunkt (9) eines Laserstrahls (7) auf dem Detektor (1) durch wenigstens eine Detektionszone (3) erfassbar ist,
**dadurch gekennzeichnet, dass**
- der Erfassungsbereich einen ebenen Winkelbereich von mindestens 180°, insbesondere mindestens 270°, vorzugsweise im Wesentlichen 360°, abdeckt,
- die Teilerfassungsrichtungen der Detektionszonen (3) mit radialer Orientierung in einer Kreisscheibe liegend angeordnet sind, und
- der Laserstrahldetektor ausgebildet ist
o zur Ableitung einer Einfallsrichtung (10) des Laserstrahls (7) aus dem Auftreffpunkt (9) sowie
o zur Bestimmung zumindest seiner azimutalen Ausrichtung relativ zum Laserstrahl (7) anhand der Einfallsrichtung (10).

8. Laserstrahldetektor nach Anspruch 7,
**dadurch gekennzeichnet, dass**
jeder Detektionszone (3) ein eigenes Sensorelement zugeordnet ist.

9. Detektor-Reflektor-Vorrichtung mit einem
Laserstrahldetektor nach einem der Ansprüche 7 oder 8 und einem reflektierenden Element (4), wobei das reflektierende Element (4) eine definierte Relativposition zum Detektor (1) einnimmt.

10. Detektor-Reflektor-Vorrichtung nach Anspruch 9,
**dadurch gekennzeichnet, dass**
die Anordnung des reflektierenden Elements (4) und des Detektors (1) auf einer gemeinsamen vertikalen Achse erfolgt.

11. Detektor-Reflektor-Vorrichtung nach Anspruch 9 oder 10,
**dadurch gekennzeichnet, dass**
das reflektierende Element (4) als Rundumprisma (4a) ausgebildet ist.

12. Detektor-Reflektor-Vorrichtung nach Anspruch 9,
**dadurch gekennzeichnet, dass**
der Detektor (1) in das reflektierende Element (4) integriert ist.

13. Detektor-Reflektor-Vorrichtung nach Anspruch 12,
**dadurch gekennzeichnet, dass**
- das reflektierende Element (4) mehrere Reflexionszonen (5) aufweist, und
- Detektionszonen (3) und Reflexionszonen (5) schachbrettartig angeordnet sind.

14. Detektor-Reflektor-Vorrichtung nach Anspruch 13,
**dadurch gekennzeichnet, dass**
die Detektionszonen (3) und die Reflexionszonen (5) auf einer Zylindermantelfläche oder einer Kugeloberfläche angeordnet sind.

15. Detektor-Reflektor-Vorrichtung nach Anspruch 12,
**dadurch gekennzeichnet, dass**
das reflektierende Element (4) eine Reflexionsschicht aufweist, die teildurchlässig für einen Laserstrahl ausgebildet ist und wenigstens ein Teil der Detektionszonen (3) der Reflexionsschicht nachgeordnet ist, insbesondere innerhalb des reflektierenden Elements (4) angeordnet ist.

## Claims

1. Method for determining position, comprising
- emitting a first laser beam (7) from a laser source (6) positioned in a reference system onto a detector (1), and simultaneously detecting the first laser beam (7) by the detector (1), whereby an emission direction of the laser source (6) and an incidence direction (10) onto the detector (1) are defined, and
- determining the position of the detector (1) relative to the laser source (6) and the reference system,
**characterised in that**
- the detector (1) has a segmented detection range composed of a multiplicity of discrete detection subranges (17) which respectively have a defined detection subdirection and of which at least two detection subdirections differ from one another,
- upon detection of the first laser beam (7) an impingement point (9) of the first laser beam (7) on the detector (1) is detected by means of at least one detection subrange (17), and the incidence direction (10) of the first laser beam onto the detector (1) is derived from the assigned at least one detection subdirection, and,
- as the position of the detector (1), at least its azimuthal alignment is determined from the emission direction and the incidence direction (10).

2. Method for determining position according to Claim 1,
**characterised in that**
- the detector (1) is spatially assigned a reflecting element (4), in particular a panoramic prism (4a), such that the position of the reflecting element (4) relative to the detector (1) is known, and
- the position of the reflective element (4) relative to the laser source (6) is determined.

3. Method for determining position according to Claim 2,
**characterised in that**
the reflecting element (4) and the detector (1) are positioned on a common axis, and the first laser beam (7) is emitted in the shape of a fan having an aperture direction, the aperture direction being orientated substantially parallel to the common axis.

4. Method for determining position according to Claim 2 or 3,
**characterised in that**,
upon determination of the relative position, the reflecting element (4) is measured by a second laser beam (18), in particular at the same time as, or before the emission of the first laser beam (7), the emission direction of the first laser beam (7) being prescribed by the direction in which the second laser beam (18) is emitted for measuring the reflecting element (4).

5. Method for determining position according to any one of Claims 2 to 4,
**characterised in that**
the detector (1) is integrated in the reflecting element (4) and, upon determination of the relative position, the emission direction and a reflector direction, as direction from the laser source (6) to the reflecting element (4), are determined.

6. Use of a method for determining position according to any one of Claims 1 to 5 for the purpose of determining an alignment of an object (13) supporting the detector (1) and the reflecting element (4), in particular of a mobile production machine (13a).

7. Laser beam detector for a method for determining position according to Claims 1 to 5, having a detection range of a multiplicity of discrete detection zones (3) to which a defined detection subdirection is respectively assigned, in particular at least 36, preferably at least 72 detection zones (3),
it being possible to detect an impingement point (9) of a laser beam (7) on the detector (1) by at least one detection zone (3),
**characterised in that**
- the detection range covers a plane angle range of at least 180°, in particular at least 270°, preferably substantially 360°,
- the detection subdirections of the detection zones (3) are arranged lying with radial orientation in a circular plate, and
- the laser beam detector is designed
o to derive an incidence direction (10) of the laser beam (7) from the impingement point (9), and
o to determine at least its azimuthal alignment relative to the laser beam (7) with the aid of the incidence direction (10).

8. Laser beam detector according to Claim 7,
**characterised in that**
each detection zone (3) is assigned a dedicated sensor element.

9. Detector-reflector device with a laser beam detector according to Claim 7 or 8, and a reflecting element (4), the reflecting element (4) adopting a defined position relative to the detector (1).

10. Detector-reflector device according to Claim 9,
**characterised in that**
the reflecting element (4) and the detector (1) are arranged on a common vertical axis.

11. Detector-reflector device according to Claim 9 or 10,
**characterised in that**
the reflecting element (4) is designed as a panoramic prism (4a).

12. Detector-reflector device according to Claim 9, **characterised in that**
the detector (1) is integrated in the reflecting element (4).

13. Detector-reflector device according to Claim 12,
**characterised in that**
- the reflecting element (4) has a plurality of reflection zones (5), and
- the detection zones (3) and the reflection zones (5) are arranged in the manner of a chessboard.

14. Detector-reflector device according to Claim 13,
**characterised in that**
the detection zones (3) and the reflection zones (5) are arranged on a lateral cylinder surface or a spherical surface.

15. Detector-reflector device according to Claim 12,
**characterised in that**
the reflecting element (4) has a reflection layer which is of partially transparent design for a laser beam, and at least a portion of the detection zones (3) is arranged downstream of the reflection layer, in particular is arranged inside the reflecting element (4).

## Revendications

1. Procédé de détermination de position, comprenant :
- l'émission d'un premier rayon laser (7) sur un détecteur (1), au moyen d'une source laser (6) positionnée dans un système de référence, et la détection simultanée du premier rayon laser (7) par le détecteur (1), faisant qu'une direction d'émergence de la source laser (9) et une direction d'incidence (10) sur le détecteur (1) sont définies, et
- la détermination de la position du détecteur (1) par rapport à la source laser (6) et au système de référence,
**caractérisé en ce que**
- le détecteur (1) présente une zone de détection segmentée, composée d'une pluralité de zones de détection partielles (17) discrètes, présentant chacune une direction de détection partielle définie, dont au moins deux directions de détection partielles se distinguent,
- lors de la détection du premier rayon laser (7), un point d'impact (9) du premier rayon laser (7) sur le détecteur (1) est détecté à l'aide d'au moins une zone de détection partielle (17) et, à partir de la au moins une direction de détection partielle associée, la direction d'incidence (10) du premier rayon laser sur le détecteur (1) est déduite, et
- à titre de position du détecteur, au moins son orientation azimutale est déterminée à partie de la direction d'émergence et de la direction d'incidence (10).

2. Procédé de détermination de position selon la revendication 1,
**caractérisé en ce qu'**
- au détecteur (1) est associé spatialement un élément réfléchissant (4), en particulier un prisme rond, de manière que la position relative de l'élément réfléchissant (4) par rapport au détecteur (1) soit connue, et
- une détection d'une position relative de l'élément réfléchissant (4) par rapport à la source lasser (6) est effectuée.

3. Procédé de détermination de position selon la revendication 2,
**caractérisé en ce que**
l'élément réfléchissant (4) et le détecteur (1) sont positionnés sur un axe commun, et le premier rayon laser (7) est émis en forme d'éventail avec une direction d'ouverture, la direction d'ouverture étant orientée sensiblement parallèlement à l'axe commun.

4. Procédé de détermination de position selon la revendication 2 ou 3,
**caractérisé en ce que,**
lors de la détermination de la position relative, une mesure de l'élément réfléchissant (4) au moyen d'un deuxième rayon laser (18) est effectuée, en particulier simultanément à, ou avant l'émission du premier rayon laser (7), la direction d'émergence du premier rayon laser (7) étant prédéterminée au moyen de la direction dans laquelle le deuxième rayon laser (18) est émis pour mesurer l'élément réfléchissant (4).

5. Procédé de détermination de position selon l'une des revendications 2 à 4,
**caractérisé en ce que**
le détecteur (1) est intégré dans l'élément réfléchissant (4) et, lors de la détermination de la position relative, la direction d'émergence et une direction de réflecteur, en tant que direction allant de la source laser (6) à l'élément réfléchissant (4), sont déterminées.

6. Utilisation d'un procédé de détermination de position selon l'une des revendication 1 à 5, pour la détermination d'une orientation d'un objet (13), portant le détecteur (1) et l'élément réfléchissant (4), en particulier d'une machine de fabrication (13a) mobile.

7. Détecteur de rayon laser, pour un procédé de détermination de position selon les revendications 1 à 5, comprenant :
une zone de détection, composée d'une pluralité de zones de détection (3) discrètes, à chacune desquelles est associée une direction de détection partielle définie, en particulier au moins 36, de préférence au moins 72 zones de détection (3),
un point d'impact (9) d'un rayon laser (7) sur le détecteur (1) étant susceptible d'être détecté au moyen d'au moins une zone de détection (3),
**caractérisé en ce que**
- la zone de détection couvre une plage angulaire d'au moins 180°, en particulier d'au moins 270°, de préférence de sensiblement 360°,
- les directions de détection partielles des zones de détection (3) étant disposées, avec une orientation radiale, dans un disque circulaire, et
- le détecteur de rayon laser est réalisé
o pour déduire une direction d'incidence (10) du rayon laser (7) à partir du point d'impact(9), ainsi que
o pour déterminer au moins son orientation azimutale par rapport au rayon laser (7), à l'aide de la direction d'incidence (10).

8. Détecteur de rayon laser selon la revendication 7,
**caractérisé en ce qu'**
un élément de capteur propre est associé à chaque zone de détection (3).

9. Dispositif détecteur-réflecteur muni d'un détecteur de rayon laser selon l'une des revendications 7 ou 8 et un élément réfléchissant (4), dans lequel l'élément réfléchissant (4) prend une position relative définie par rapport au détecteur (1).

10. Dispositif détecteur-réflecteur selon la revendication 9,
**caractérisé en ce que**
l'agencement de l'élément réfléchissant (4) et du détecteur (1) s'effectue sur un axe vertical commun.

11. Dispositif détecteur-réflecteur selon la revendication 9 ou 10,
**caractérisé en ce que**
l'élément réfléchissant (4) est réalisé sous forme de prisme rond (4a).

12. Dispositif détecteur-réflecteur selon la revendication 9,
**caractérisé en ce que**
le détecteur (1) est intégré dans l'élément réfléchissant (4).

13. Dispositif détecteur-réflecteur selon la revendication 12,
**caractérisé en ce que**
- l'élément réfléchissant (4) présente plusieurs zones de réflexion (5), et
- les zones de détection (3) et les zones de réflexion (5) sont disposées en damier.

14. Dispositif détecteur-réflecteur selon là revendication 13,
**caractérisé en ce que**
les zones de détection (3) et les zones de réflexion (5) sont disposées sur une surface d'enveloppe cylindrique ou une surface sphérique.

15. Dispositif détecteur-réflecteur selon la revendication 12,
**caractérisé en ce que**
l'élément réfléchissant (4) présente une couche de réflexion, réalisée de manière à être partiellement transparente à un rayon laser et au moins une partie des zones de détection (3) est disposée en aval de la couche de réflexion, en particulier disposée à l'intérieur de l'élément réfléchissant (4).
